# EUROPÄISCHE PATENTSCHRIFT

(11) **EP 0 897 357 B1**
(45) Veröffentlichungstag und Bekanntmachung des Hinweises auf die Patenterteilung: **17.10.2001**
(21) Anmeldenummer: 97906134.8
(22) Anmeldetag: 27.02.1997
(51) Int. Cl.: B60S 1/04

(54) **SCHEIBENWISCHERANLAGE FÜR EIN FAHRZEUG UND VERFAHREN ZUR HERSTELLUNG**
WINDSCREEN WIPER SYSTEM FOR VEHICLES AND METHOD OF MANUFACTURING IT
SYSTEME D'ESSUIE-GLACE POUR VEHICULE ET PROCEDE DE PRODUCTION DUDIT SYSTEME

(30) Priorität: 18.03.1996 DE 19610343
(43) Veröffentlichungstag der Anmeldung: 24.02.1999
(73) Patentinhaber: Volkswagen Aktiengesellschaft, 38436 Wolfsburg (DE)
(72) Erfinder: OSTROWSKI, Wolfgang, D-38446 Wolfsburg (DE)
(86) Internationale Anmeldenummer: EP9700946
(87) Internationale Veröffentlichungsnummer: WO9734789

(56) Entgegenhaltungen:
- EP-A- 0 497 645
- DE-A- 4 322 632
- DE-U- 8 812 550

## Beschreibung

Die Erfindung betrifft eine Scheibenwischeranlage für ein Fahrzeug, insbesondere ein Kraftfahrzeug, und ein Verfahren zu deren Herstellung.

Scheibenwischeranlagen für Fahrzeuge werden gewöhnlich mit einem Zahnstangenantrieb oder einem Gestängeantrieb ausgerüstet. Scheibenwischeranlagen mit einem Gestängeantrieb weisen einen am Fahrzeugkörper anordbaren Träger für einen aus einem Wischermotor, einem Getriebe und einem umlaufenden Hebelarm bestehenden Antrieb und in der Regel zwei im Abstand zu diesem angeordnete Lagerböcke auf, wobei der Antrieb zwischen den Lagerböcken oder aber auch im Bereich eines der Lagerböcke angeordnet sein kann. In den Lagerböcken ist jeweils die Antriebswelle eines Wischerarmes angeordnet, an der auf der diesem abgewandten Seite ein Schwenkhebel drehfest angeordnet ist, der durch ein Antriebsgestänge gelenkig mit dem Hebelarm verbunden ist. Die umlaufende Bewegung des Hebelarmes wird durch dieses in eine Hin- und Herbewegung des jeweiligen Schwenkhebels und damit des Wischerarmes umgesetzt, derart, daß die Wischerarme im Parallelbetrieb bewegt werden.

Der Träger kann ein Hohlprofil oder ein offenes Profil sein, an dem die Antriebselemente an einem zusätzlich angebrachten Trägerblech angeordnet und die Lagerböcke als extern erstellte Gußteile angeschraubt oder mit dem Träger verstemmt sind.

Die Herstellung einer solchen Scheibenwischeranlage erfolgt durch die Herstellung einzelner Bauteile, auch des Trägers, des Trägerblechs und der Lagerböcke, und durch eine anschließende Montage dieser Bauteile zu einer Baueinheit. Diese wird in das Fahrzeug eingesetzt, und anschließend werden die Wischerarme montiert. Es ist offensichtlich, daß der Herstellungs- und Montageaufwand relativ groß ist.

Ferner ist bekannt aus DE-U-8812550.5, eine Scheibenwischeranlage für ein Fahrzeug mit einem Träger für eine Gelenkhebeleinrichtung, die antriebsseitig mit wenigstens eine Wischermotor und abtriebsseitig mit wenigstens einer Antriebswelle eines Wischerarmes verbunden ist. Weiterhin ist aus DE-A-4322632 bekannt, ein Lagerbock integriert einstückig mit einem Verbindungsstreben, insbesondere von Fahrzeugstreben für die Lagerung von Achsen, Radaufhängungen oder dergleichen, die mittels Innenhochdruckumformung herzustellen sind.

Es ist Aufgabe der Erfindung, eine Scheibenwischeranlage für ein Fahrzeug, insbesondere für ein Kraftfahrzeug nach dem Oberbegriff des Anspruchs 1 zu schaffen, die mit reduziertem Aufwand und damit kostengünstig herstellbar ist und ein Herstellungsverfahren anzugeben.

Die Aufgabe wird bei einer Scheibenwischeranlage nach dem Oberbegriff des Anspruchs 1 und einem Herstellungsverfahren für diese nach dem Oberbegriff des Anspruchs 7 durch deren kennzeichnende Merkmale gelöst.

Der Träger ist erfindungsgemäß ein durch Innenhochdruckumformung hergestelltes Formteil mit mindestens einem integrierten Lagerbock für die Antriebswellen der Wischerarme und mit einer integrierten Antriebshalterung nach Anspruch 1. Diese einstückige Bauteil ist in im wesentlichen einem Arbeitsgang erstellbar. Aufwendige Gußteile sind nicht mehr erforderlich. Überdies ist der Montageaufwand erheblich reduziert, auch, weil Toleranzeinhaltungsprobleme bei der Montage der Lagerböcke entfallen. Die Anlage ist kompakt und hinsichtlich des Kraftflusses günstiger.

Die Lagerböcke und die Antriebshalterung können aus im wesentlichen quer zur Längsachse des Formteils gegenüberliegend ausgebildeten rohrförmigen Ansätzen gebildet sein, um die Stabilität der Anordnung der Lagerbuchsen und des Antriebs zu erhöhen.

Die Lagerbuchsen können in die jeweiligen Lagerböcke eingepreßt sein, was deren Sitz optimiert, was aber auch im Zusammenhang mit der vorstehend genannten Maßnahme von Vorteil ist, da die Lagerbuchsen das rohrförmige Teil vollständig durchdringen. Von besonderem Vorteil ist auch, daß der Antrieb direkt am Träger befestigt ist, was durch die Halterung des Getriebes , dessen Abmessungen kleiner als die Motorabmessungen sind, an der Antriebshalterung gelingt. Durch die direkte Antriebshalterung am Träger ergibt sich insgesamt eine im Fahrzeug relativ wenig Platz beanspruchende Scheibenwischeranlage.

Der wischerseitige Ansatz der Lagerböcke kann länger als der gegenüberliegende schwenkarmseitige Ansatz ausgebildet sein, wodurch sich ein besserer Sitz der in die Lagerböcke eingepreßten Lagerbuchsen ergibt und die Stabilität der Anlage, die besonders im Bereich der hin- und herbewegten Wischerarme gegeben sein muß, günstig beeinflußt wird.

Die Herstellung der Scheibenwischeranlage erfolgt erfindungsgemäß dadurch, daß der Träger einschließlich der Lagerböcke und einer Antriebshalterung einstückig aus einem rohrförmigen Halbzeug durch Innenhochdruckumformung kaltgeformt wird.

Dabei kann das Halbzeug in eine Druckform mit einer die Gestalt des zu formenden Trägers umschließenden Andruckfläche mit im vorbestimmten Anordnungsbereich des Antriebs und der Lagerböcke im wesentlichen radial zur Trägerlängsachse ausgebildeten und paarweise gegenüberliegenden napfartigen Ausbuchtungen gegeben werden und anschließend übe, ein in sein Inneres eingeleitetes druckübertragendes Medium mit Hochdruck beaufschlagt werden, wodurch die Rohrwandung allseitig an die Andruckfläche gepreßt und in die Ausbuchtungen getrieben wird, um rohrförmige Ansätze auszubilden.

In die einen Lagerbock bildenden und gegenüberliegend am Träger ausgebildeten Ansätze können eine Lagerbuchse eingetrieben und in die die Antriebshalterung bildenden Ansätze das Getriebegehäuse für das am Wischermotor angeordnete Getriebe eingepreßt werden, wodurch sich weitere Befestigungsmaßnahmen erübrigen.

Die Erfindung wird nachstehend anhand eines Ausführungsbeispiels erläutert. In der zugehörigen Zeichnung zeigen im Schnitt:
- Fig. 1:: eine vormontierte erfindungsgemäße Scheibenwischeranlage ohne Wischerarme, schematisch,
- Fig. 1a:: eine Wirkprinzipskizze,
- Fig. 2:: eine Druckform zur Herstellung eines erfindungsgemäßen Trägers mit rohrförmigem Halbzeug mit kreisrundem Querschnitt,
- Fig. 3:: die Druckform im geschlossenen Zustand,
- Fig. 4:: die Trägerausbildung nach der Druckbeaufschlagung in der Druckform und
- Fig. 5:: den aus der Druckform entnommenen Träger.

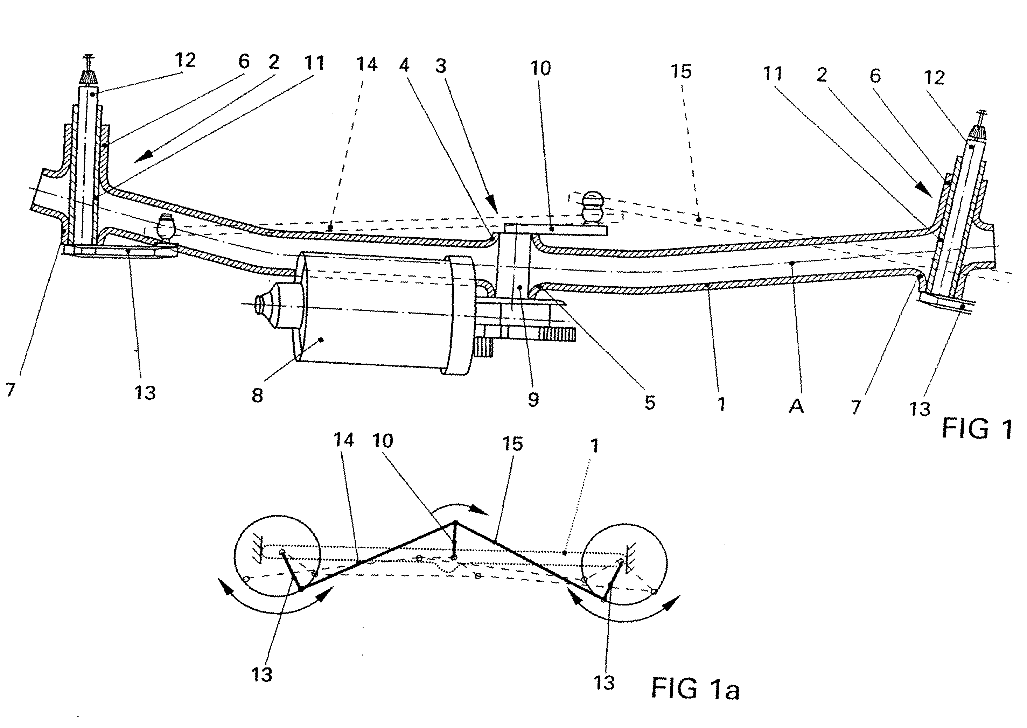

Fig. 1 zeigt eine vormontierte erfindungsgemäße Scheibenwischeranlage für den Einbau in ein Kraftfahrzeug. Die Vormontageeinheit weist einen durch eine Innenhochdruckumformung hergestellten rohrförmigen Träger 1 mit vorzugsweise kreisrundem Querschnitt auf, in dem zwei Lagerböcke 2 und eine Antriebshalterung 3 integriert sind. Diese (3) und die Lagerböcke (2) sind jeweils aus zwei im wesentlichen quer zur Trägerlängsachse A ausgebildeten und am Träger 1 gegenüberliegend angeordneten rohrförmigen Ansätzen 4; 5 und 6; 7 gebildet, wobei die Ansätze 6 auf der Seite der zu montierenden Wischerarme (nicht dargestellt) länger ausgebildet sind als die am Träger 1 gegenüberliegend angeordneten Ansätze 7. In der Antriebshalterung 3 ist der aus einem Wischermotor 8, einem Getriebe 9 und einem an diesem angeordneten drehbaren Hebelarm 10 gebildete Antrieb mit dem Gehäuse des Getriebes 9 gehaltert. Das Getriebegehäuse (9) ist in die Antriebshalterung 3 eingepreßt, derart, daß es von beiden Ansätzen 4 und 5 umschlossen ist. In die die Lagerböcke 2 bildenden Ansätze 6 und 7 sind Lagerbuchsen 11 eingepreßt, in denen jeweils die Antriebswelle 12 für einen Wischerarm angeordnet ist. An den Antriebswellen 12 sind auf der dem jeweiligen Wischerarm abgewandten Seite Schwenkhebel 13 drehfest angeordnet, die wiederum durch ein Antriebsgestänge 14, 15 (nur angedeutet) mit dem Hebelarm 10 gelenkig verbunden sind, so daß die Schwenkhebel 13 bei einer Drehung des Hebelarmes 10 parallel zueinander eine Hin- und Herbewegung vollführen (Fig. 1a). Die vormontierte Scheibenwischeranlage ist an beiden Enden des in Figur 1 punktiert angedeuteten Trägers 1 im Kraftfahrzeug (nicht dargestellt) befestigbar. Der Träger ist also ortsfest im Kraftfahrzeug verbaut und bildet so die Basis für die beweglichen Elemente 10 und 13 bis 15.

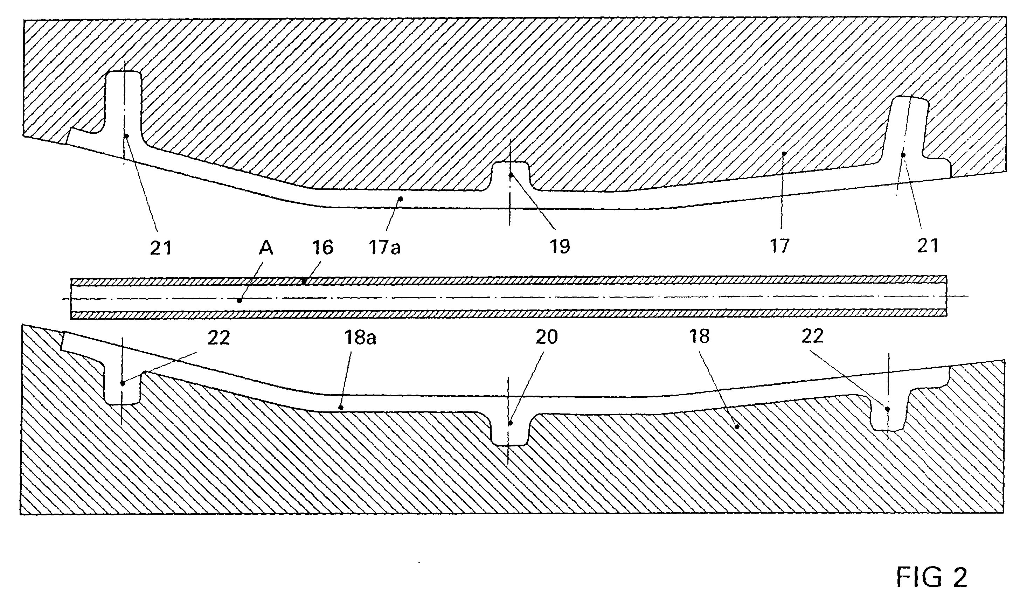

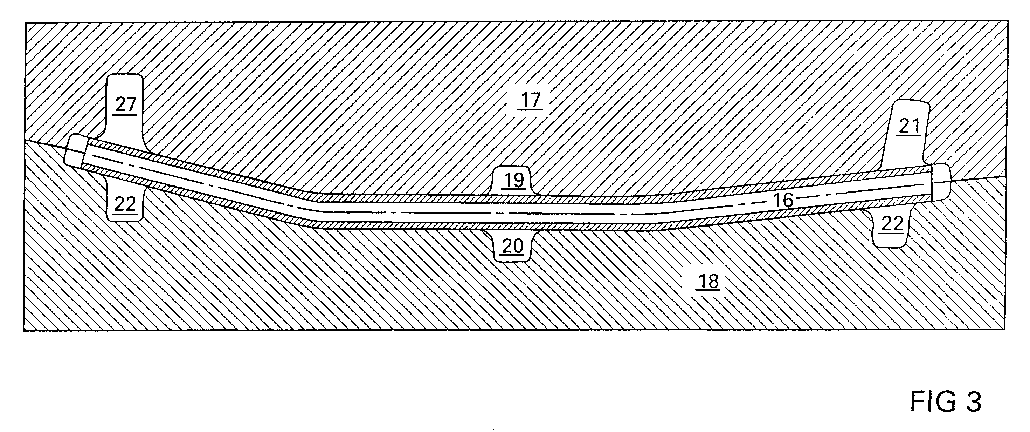

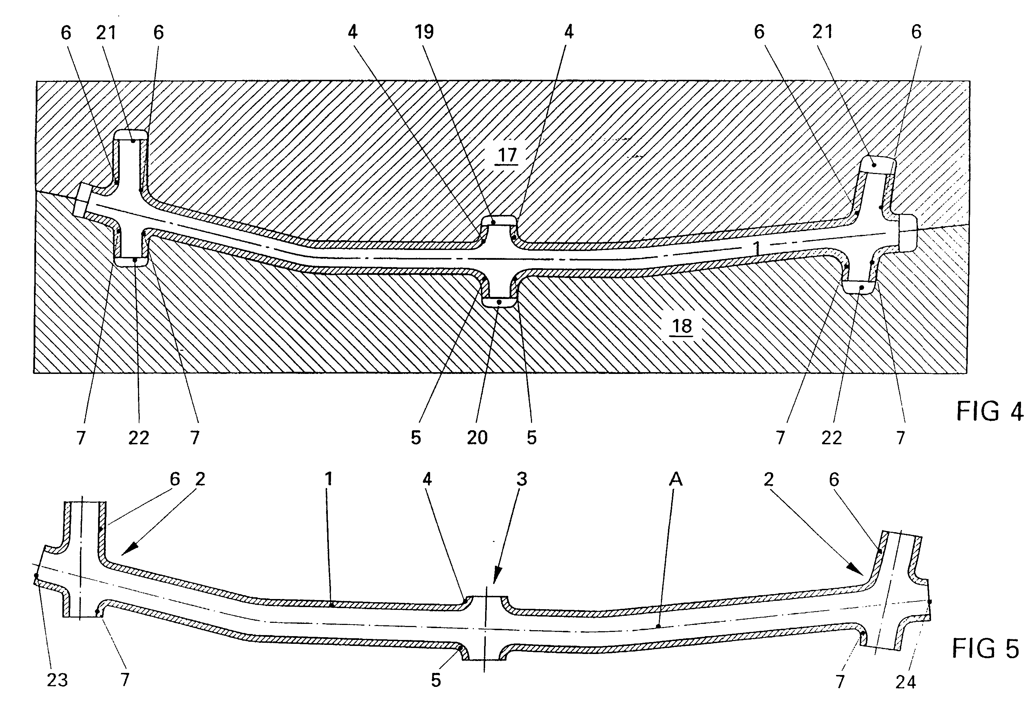

Zur Herstellung eines Trägers 1 mit integrierten Lagerböcken 2 und integrierter Antriebshalterung 3 für eine erfindungsgemäße Scheibenwischeranlage wird ein beispielsweise stranggepreßtes Aluminiumrohr 16 mit der für den Träger 1 vorbestimmten Länge und einem diesem entsprechenden Durchmesser in eine zweiteilige Druckform 17; 18 mit gegenüberliegend ausgebildeten Andruckflächen 17a und 18a gegeben (Fig. 2). In den beiden Teilen 17 und 18 der Druckform sind im vorbestimmten Anordnungsbereich des Getriebes 9 und der Lagerböcke 2 im wesentlichen radial zur Trägerlängsachse A paarweise gegenüberliegend napfartige Ausbuchtungen 19; 20 und 21; 22 ausgebildet. Beim Zusammendrücken der beiden Teile 17 und 18 der Druckform wird das Rohr 16 in den Bereichen zwischen der Antriebshalterung 3 und den Lagerböcken 2 leicht abgewinkelt, um den Einbauverhältnissen im Fahrzeug Rechnung zu tragen (Fig. 3). Das Rohr liegt danach allseitig an den Andruckflächen 17a und 18a an. In dieser Lage wird das Rohr in seinem Innern druckbeaufschlagt, wodurch die Rohrwandung in die Ausbuchtungen 19; 20 und 21; 22 hineingedrückt wird und rohrförmige Ansätze 4; 5 und 6; 7 ausgebildet werden (Fig. 4). Nach der Druckbeaufschlagung wird das zu dem Träger 1 verformte Rohr 16 aus der Form genommen. Die Lagerböcke 2 und die Antriebshalterung 3 sind einstückig angeformt (Fig. 5). Gegebenfalls können freie Rohrenden 23, 24 auch durch entsprechende Gestaltung der Druckformen 17, 18 zusammengequetscht sein, so daß sich für die Befestigung des Trägers 1 mittels Verschraubung oder einer anderen Verbindungstechnik weitgehend ebene Auflageflächen ergeben.

## Patentansprüche

1. Scheibenwischeranlage für ein Fahrzeug mit einem rohrförmigen Träger für eine Gelenkhebeleinrichtung, die antriebsseitig mit wenigstens einem Wischermotor und abtriebsseitig mit wenigstens einer Antriebswelle eines Wischerarms verbunden ist, **dadurch gekennzeichnet, daß** der Träger (1) ein durch Innenhochdruckumformung hergestelltes Formteil ist, an dem wenigstens ein integrierter Lagerbock (2) für die wenigstens eine Antriebswelle (12) und wenigstens eine integrierte Antriebshalterung (3) einstückig angeformt ist, daß das Formteil rohrförmig ausgebildet ist, und daß die Antriebshalterung (3) und die Lagerböcke (2) jeweils aus zwei im wesentlichen quer zur Längsachse (A) des Formteils gegenüberliegend ausgebildeten rohrförmigen Ansätzen (4; 5 und 6; 7) gebildet sind.

2. Scheibenwischeranlage nach Anspruch 1, **dadurch gekennzeichnet, daß** jeweils in die einen Lagerbock (2) bildenden Ansätze (6; 7) eine Lagerbuchse (11) und in die die Antriebshalterung (3) bildenden Ansätze (4; 5) das Gehäuse für das am Wischermotor (8) angeordnete Getriebe (9) eingepreßt sind.

3. Scheibenwischeranlage nach Anspruch 2, **dadurch gekennzeichnet, daß** die Ansätze (6; 7) unterschiedlich lang ausgebildet sind und jeweils der wischerarmseitige Ansatz (6) länger ist.

4. Scheibenwischeranlage nach einem der vorhergehenden Ansprüche, **dadurch gekennzeichnet, daß** der Träger (1) beidendig am Fahrzeug befestigbar ist.

5. Scheibenwischeranlage nach wenigstens einem der Ansprüche 1 bis 4, **gekennzeichnet durch** einen den Wischermotor, ein Getriebe und einen Hebelarm aufweisenden Antrieb und zwei im Abstand zu diesem angeordnete Lagerböcke (2), in denen jeweils die mit einem Schwenkhebel (13) versehene Antriebswelle (12) eines Wischerarmes angeordnet ist, wobei die Schwenkhebel (13) mit dem Hebelarm über ein Antriebsgestänge (14, 15) verbunden sind.

6. Scheibenwischeranlage nach Anspruch 1 oder 5, **dadurch gekennzeichnet, daß** an dem Träger eine Halterung zur Aufnahme des Wischermotors angeformt ist.

7. Verfahren zur Herstellung einer Scheibenwischeranlage für ein Fahrzeug, insbesondere ein Kraftfahrzeug, bei dem an einem Träger ein einen Wischermotor, ein Getriebe und einen Hebelarm aufweisender Antrieb und im Abstand von diesem zwei Lagerböcke für jeweils eine mit einem Schwenkhebel versehene Antriebswelle eines Wischerarmes und ein Antriebsgestänge zwischen dem Hebelarm und dem Schwenkhebel angeordnet werden und diese Baueinheit anschließend im Fahrzeug installiert wird, **dadurch gekennzeichnet, daß** der Träger (1) einschließlich der Lagerböcke (2) und einer Antriebshalterung (3) einstückig aus einem rohrförmigen Halbzeug (16) durch Innenhochdruckumformung kaltgeformt wird.

8. Verfahren nach Anspruch 7, **dadurch gekennzeichnet, daß** das Halbzeug (16) mit der vorbestimmten Länge und im wesentlichen dem vorbestimmten Querschnitt des Trägers (1) in eine mehrteilige Druckform (17; 18) mit einer die Gestalt des zu formenden Trägers (1) umschließenden Andruckfläche (17a; 18a) mit im vorbestimmten Anordnungsbereich des Antriebs und der Lagerböcke (2) im wesentlichen radial zur Längsachse (A) ausgebildeten und paarweise gegenüberliegenden napfartigen Ausbuchtungen (19; 20 und 21; 22) gegeben und das Halbzeug (16) anschließend in seinem Innern hochdruckbeaufschlagt wird, wodurch die Rohrwandung allseitig an die Andruckflächen (17a; 18a) gepreßt und in die Ausbuchtungen (19; 20 und 21; 22) getrieben wird.

9. Verfahren nach Anspruch 8, **dadurch gekennzeichnet, daß** in die jeweils einen Lagerbock (2) bildenden und gegenüberliegend am Träger (1) ausgebildeten Ansätze (6; 7) eine Lagerbuchse (11) und in die die Antriebshalterung (3) bildenden Ansätze (4; 5) das Gehäuse für das am Wischermotor (8) angeordnete Getriebe (9) eingetrieben werden.

10. Verfahren nach Anspruch 7 oder 8, **dadurch gekennzeichnet, daß** das rohrförmige Halbzeug (16) ein Aluminium-Stranggußprofil ist.

## Claims

1. Windscreen wiper system for a vehicle having a tubular carrier for an articulated lever device, which is connected on the drive-side to at least one wiper motor and is connected on the driven-side to at least one drive shaft of a wiper arm, **characterised in that** the carrier (1) is a moulded part which is produced by virtue of an internal high pressure moulding process and on which at least one integrated bearing block (2) for the at least one drive shaft (12), and at least one integrated drive holding device (3) are integrally formed in one piece, that the moulded part is formed in a tubular manner, and that the drive holding device (3) and the bearing blocks (2) are formed in each case from two tubular projections (4; 5 and 6; 7) which are formed lying opposite each other substantially transverse to the longitudinal axis (A) of the moulded part.

2. Windscreen wiper system according to claim 1, **characterised in that** in each case a bearing bush (11) is pressed into the projections (6; 7), which form one bearing block (2), and the housing for the transmission (9), which is disposed on the wiper motor (8), is pressed into the projections (4; 5) which form the drive holding device (3).

3. Windscreen wiper system according to claim 2, **characterised in that** the projections (6; 7) comprise different lengths and the wiper arm-side projection (6) is longer in each case.

4. Windscreen wiper system according to any one of the preceding claims, **characterised in that** the carrier (1) can be attached to the vehicle at both ends.

5. Windscreen wiper system according to at least one of the claims 1 to 4, **characterised by** a drive, which comprises the wiper motor, a transmission and a lever arm, and by two bearing blocks (2) which are disposed at a spaced interval thereto and in which is disposed in each case the drive shaft (12) of a wiper arm, which drive shaft is provided with a pivot lever (13), wherein the pivot levers (13) are connected to the lever arm by way of a driving linkage (14, 15).

6. Windscreen wiper system according to claim 1 or 5, **characterised in that** a holding device for the purpose of receiving the wiper motor is integrally formed on the carrier.

7. Method of producing a windscreen wiper system for a vehicle, in particular a motor vehicle, wherein a drive, which comprises a wiper motor, a transmission and a lever arm, is disposed on a carrier, and disposed at a spaced interval thereto are two bearing blocks in each case for a drive shaft of a wiper arm, which drive shaft is provided with a pivot lever, and for a driving linkage between the lever arm and the pivot lever and this constructional unit is subsequently installed in the vehicle, **characterised in that** the carrier (1) including the bearing blocks (2) and a drive holding device (3) are cold-formed in one piece from a tubular semi-finished product (16) by virtue of an internal high pressure moulding process.

8. Method according to claim 7, **characterised in that** the semi-finished product (16) having the predetermined length and substantially the predetermined cross-section of the carrier (1) is placed into a multiple-part pressure mould (17; 18) having a contact pressure surface (17a; 18a), which encompasses the shape of the carrier (1) being formed and comprises cup-like recesses (19; 20 and 21; 22) which are formed substantially radially to the longitudinal axis (A) in the predetermined arrangement region of the drive and the bearing blocks (2) and lie opposite each other in pairs and the inner part of the semi-finished product (16) is subsequently subjected to high pressure, whereby the tube wall is pressed on all sides against the contact pressure surfaces (17a; 18a) and driven into the recesses (19; 20 and 20; 21).

9. Method according to claim 8, **characterised in that** a bearing bush (11) is driven into the projections (6; 7), which in each case form one bearing block (2) and are formed lying opposite each other on the carrier (1), and the housing for the transmission (9), which is disposed on the wiper motor (8), is driven into the projections (4; 5) which form the drive holding device (3).

10. Method according to claim 7 or 8, **characterised in that** the tubular semi-finished product (16) is an aluminium continuous-cast profile.

## Revendications

1. Système d'essuie-glace pour un véhicule, comportant un support tubulaire destiné à un dispositif à leviers articulés qui est relié, du côté de l'entraînement à au moins un moteur d'essuie-glace, et du côté de la sortie à au moins un arbre d'entraînement d'un bras d'essuie-glace, **caractérisé en ce que** le support (1) est une pièce de forme fabriquée par formage à haute pression interne, sur laquelle sont formés d'un seul tenant au moins un palier de support (2) intégré pour l'au moins un arbre d'entraînement (12), et au moins une fixation d'entraînement (3) intégrée, **en ce que** la pièce de forme est tubulaire, et **en ce que** la fixation de l'entraînement (3) et les paliers de support (2) sont respectivement constitués de deux prolongements tubulaires (4 ; 5 et 6 ; 7) agencés sensiblement transversalement à l'axe longitudinal (A) de la pièce de forme en étant opposés les uns par rapport aux autres.

2. Système d'essuie-glace selon la revendication 1, **caractérisé en ce qu'**un coussinet (11) est emmanché à force dans les prolongements (6 ; 7) constituant un palier de support (2), et **en ce que** le carter de la transmission (9) disposé sur le moteur d'essuie-glace (8), est emmanché à force dans les prolongements (4 ; 5) constituant la fixation de l'entraînement (3).

3. Système d'essuie-glace selon la revendication 2, **caractérisé en ce que** les prolongements (6 ; 7) sont de différentes longueurs, et **en ce que** le prolongement (6) situé du côté du bras d'essuie-glace est à chaque fois plus long.

4. Système d'essuie-glace selon l'une quelconque des revendications précédentes, **caractérisé en ce que** le support (1) peut être fixé au véhicule par ses deux extrémités.

5. Système d'essuie-glace selon l'une au moins des revendications 1 à 4, **caractérisé par** un entraînement comportant le moteur d'essuie-glace, une transmission et un bras de levier, et par deux paliers de support (2) disposés à une certaine distance de celui-ci, dans chacun desquels est disposé l'arbre d'entraînement (12) muni d'un levier pivotant (13) d'un bras d'essuie-glace, les leviers pivotants (13) étant reliés au bras de levier par l'intermédiaire d'une tringlerie d'entraînement (14, 15).

6. Système d'essuie-glace selon la revendication 1 ou 5, **caractérisé en ce qu'**une fixation destinée à la réception du moteur d'essuie-glace est formée sur le support.

7. Procédé destiné à la fabrication .d'un système d'essuie-glace pour un véhicule, notamment pour un véhicule automobile, dans lequel un entraînement comportant un moteur d'essuie-glace, une transmission et un bras de levier est disposé sur un support, et à une certaine distance de celui-ci deux paliers de support sont destinés chacun à un arbre d'entraînement muni d'un levier pivotant d'un bras d'essuie-glace, et une tringlerie d'entraînement entre le bras de levier et le levier pivotant, et dans lequel cette unité modulaire est ensuite installée dans le véhicule, **caractérisé en ce que** le support (1), y compris les paliers de support (2) et une fixation d'entraînement (3), sont formés à froid d'un seul tenant à partir d'un produit semi-fini tubulaire (16) par transformation à haute pression interne.

8. Procédé selon la revendication 7, **caractérisé en ce que** le produit semi-fini (16), ayant la longueur prédéterminée et sensiblement la section transversale prédéterminée du support (1), est introduit dans une matrice de formage en plusieurs parties (17 ; 18) comportant une surface de pressage (17a ; 18a) enserrant le profil du support (1) à former, et dans la zone de disposition prédéterminée de l'entraînement et des paliers de support (2), des indentations de type godet (19 ; 20 et 21 ; 22) agencées pour l'essentiel radialement à l'axe longitudinal (A) et par couples opposés, et **en ce que** l'intérieur du produit semi-fini (16) est ensuite soumis à une haute pression, moyen par lequel la paroi du tube est appliquée de tous côtés contre les surfaces de pressage (17a ; 18a) et pressée dans les indentations (19 ; 20 et 21 ; 22).

9. Procédé selon la revendication 8, **caractérisé en ce qu'**un coussinet (11) est emmanché à force dans chaque prolongement (6 ; 7) constituant un palier de support (2) et formés sur le support (1) en étant opposés l'un par rapport à l'autre, et **en ce que** le carter de la transmission (9) disposée sur le moteur d'essuie-glace (8), est emmanché à force dans les prolongements (4 ; 5) constituant la fixation de l'entraînement (3).

10. Procédé selon la revendication 7 ou 8, **caractérisé en ce que** le produit semi-fini tubulaire (16) est un profilé extrudé en aluminium.
